# EUROPEAN PATENT SPECIFICATION

(11) **EP 3 284 792 B1**
(45) Date of publication and mention of the grant of the patent: **09.10.2019**
(21) Application number: 17186818.5
(22) Date of filing: 18.08.2017
(51) Int. Cl.: C09D 11/322, B41M 5/00, C09D 11/037, C09D 11/106

(54) **METHOD FOR PREPARING CERAMIC INK COMPRISING METAL PRECURSOR AND CERAMIC PIGMENT AND CERAMIC INK MANUFACTURED BY THE SAME**
VERFAHREN ZUR HERSTELLUNG VON KERAMISCHER TINTE MIT METALLVORLÄUFER UND KERAMISCHEM PIGMENT UND DURCH DAS VERFAHREN HERGESTELLTE KERAMISCHE TINTE
PROCÉDÉ DE PRÉPARATION D'ENCRE CÉRAMIQUE COMPRENANT UN PRÉCURSEUR MÉTALLIQUE ET UN PIGMENT CÉRAMIQUE ET ENCRE CÉRAMIQUE FABRIQUÉE SELON LEDIT PROCÉDÉ

(30) Priority: 18.08.2016 KR 20160104823
(43) Date of publication of application: 21.02.2018
(73) Proprietor: Inktec Co., Ltd., Ansan-si, Gyeonggi-do 15426 (KR)
(72) Inventor: CHUNG, Kwang-Choon, 16820 Gyeonggi-do (KR); GONG, Myoung Seon, 06337 Gangnam-gu (KR); HAN, Mi-Kyoung, 15811 Gyeonggi-do (KR); KIM, Min-Hee, 49388 Busan (KR)
(74) Representative: Patentwerk B.V.

(56) References cited:
- KR-A- 20160 014 554
- US-A1- 2009 120 800
- US-B1- 6 402 823
- US-B2- 7 316 741

## Description

### 1. Field

The present invention relates to a method for preparing ceramic ink comprising a carbamate-based metal precursor and ceramic pigment, and the ceramic ink prepared by the same, and more particularly, to a method for preparing ceramic ink where ceramic pigment is dispersed in a metal carbamate solution, and the ceramic ink prepared by the same.

### 2. Background

In industrial fields such as ceramics, glass, tiles and the like, applying an inkjet printing method has numerous advantages compared to production by conventional silk printing methods. In the inkjet printing method, designs are transmitted in files, thus allowing a large variety of items to be produced in small volumes even under a mass production system. Further, compared to conventional silk printing processes, the inkjet printing method can express various colors and allows one step preparation. Accordingly, the processing time can be reduced, and various colors can be realized with digital four primary color ceramic ink. The inkjet printing method also allows imaging by discharging ink to a desired position and thus has an efficiency of 95% or more and establishes a network-based preparation site thereby increasing the processing efficiency and minimizing facility space. Not only that, the inkjet printing method allows non-contact printing, that can be used in various materials and in non-flat substrates, and especially, since it can be utilized even in edges of a printing surface, an additional process of polishing, cutting and the like is not required. There is currently a worldwide tendency to secure inkjet printing facilities and source technologies for material areas related to ceramic, tiles and the like, and localization of inkjet printing systems and researches on high resolution color expression ceramic ink of digital four primary colors (CMYK) are actively being led by domestic industries and research institutions. The basic digital colors used in inkjet printing are the CMYK four colors, referring to cyan, magenta, yellow and black. Therefore, developing ceramic ink or nano pigment for each CMYK color, having thermal stability, excellent color tone and dispersion stability so as to be applied to ceramic tiles, is very important.

Generally, ceramic ink can be prepared in the following method.

First, Japanese Laid-open Publication No. 2008-222962 discloses a method of mixing salts of various metals having compositions of ceramic pigment as raw material, plasticizing them, and then pulverizing them to prepare ceramic ink. Laser ablation method or high energy ball milling method are being used as a process to pulverize solid-plasticized pigment. The laser ablation method is a method of preparing nano particles through condensing the vapor of atoms or molecules generated by applying laser beam to raw material in vacuum, but this method is relatively expensive and uses laser having low thermal efficiency, and thus has a problem of too much production cost compared to the total output. Further, as for the method of preparing nano particles through mechanical pulverizing, since ceramic pigments have extremely high hardness, it is difficult to obtain particles of the size of 500nm or below by physical pulverizing, and when dispersing a pigment prepared in such a method, the specific gravity and particle size of the pigment may be too big, decreasing the dispersion stability. Not only that, an excessive amount of dispersant will have to be used to circulate the ceramic pigment ink in order to prevent precipitation or increase the dispersion effect, in which case characteristics such as ink viscosity or surface tension will deteriorate, requiring an increase of cartridge temperature of the ink to use the ink.

Second, there is a method of preparing nano particles through a chemical treatment on the metal precursor constituting the ceramic pigment in order to improve the aforementioned difficulties in generating nano particles. Chemical synthesis methods can largely be classified into vapor methods and liquid methods. The vapor methods use plasma or gas evaporation methods, and thus require expensive equipment, which is a disadvantage. Therefore, the liquid methods are most widely used since the liquid methods can synthesize uniform particles at low cost. Types of processes known for preparing particles through chemical reaction include the sol-gel method, hydrothermal method, precipitation method, emulsion method and pyrolysis method, etc. These methods design chemical reaction in units of atom or molecule, which are nano scale units, so that the intended nano particles can be obtained. However, not only does this cost a lot of money, but there is a disadvantage that it is difficult to prepare the nano particles in such methods.

Third, as disclosed in M. Blosi et al., Dyes and Pigments 94 (2012) 355-36, and S. Mestre et al., J Euro Ceramic Soc., 32 (2012) 2825-2830, from gold or silver, it is possible to prepare ceramic nano pigments of red color and yellow color each having single nano particles. However, although these pigments show their specific colors of red and yellow when dispersed in solutions, when they are plasticized, the particles grow and so their unique plasmon colors disappear. In such a case, it is possible to use the method of preparing nano shells such as silica or alumina to protect the nano size cores so as to maintain the plasmon colors of gold or silver, but nano shells are very difficult to prepare, and also has a disadvantage of high cost.

Fourth, there is a method of dissolving precursors of metal oxides that form colors, in a certain solvent according to the composition of the ceramic pigment atoms, and then using the dissolved precursor solution as ink in pattern-printing using an inkjet printer, and then plasticizing the same so that colors can appear. If the metal precursors can be decomposed at a low temperature, nano particles will be generated at that temperature, in which case color expression can be expected from fusion of these nano particles. US Registered Patent No. 6,402,823 discloses using carboxylic salt to mix precursors that form the ingredients of various pigments, according to the composition of each pigment, to prepare ceramic ink. However, when preparing such a pigment precursor ink, carboxylic radicals are used mostly in the organic chelate portion of the organic metal compound, which limits the solubility in the organic solvent, and if a polyvalent metal salt is used, there is a disadvantage where the yield of the metal ingredient deteriorates due to the excessive yield of the organic chelate component. But a more fundamental disadvantage is that when plasticization is performed on an upper or lower portion of glaze, colors can be diluted. This is because the ingredients of glaze contain SiO₂, Al₂O₃, ZnO, BaO, CaO, MgO and B₂O₃ as main ingredients that may act as hosts of ceramic pigment. There are various kinds of precursors of metals or metal oxides, which can form ceramic pigment. For example, there are inorganic negative ions such as chlorine, nitric acid, sulfuric acid, carbonic acid, perchloric acid and the like, but although these inorganic negative ions can be easily dissolved in aqueous solution, they are insoluble in inorganic solvents, and when plasticizing them, a high temperature is required to decompose the negative ions. Meanwhile, organic and chelate negative ions of some organic acid group ingredients such as carboxylic acid, oxalic acid, acetyl acetone, alkyl acetyl acetic acid and the like are being dissolved in organic solvents and decomposed at low temperatures, so as to be used in applications. However, the metals required in ceramic ink have various oxidation numbers, and thus most of the organic metal salts that have reacted with metals with large oxidation numbers show insolubility in organic solvents. Therefore, there is a need for organic negative ions that can act as negative ions of various metals and form stable salt, which can be easily dissolved in polar and non-polar organic solvents, and that can be easily synthesized.

Fifth, according to US Registered Patent No. 7,316,741, there was an attempt to heat and react metal precursors forming a certain ceramic pigment, in a solvent and reducing material such as diethylene glycol, to decompose or hydrolyze organic negative ions that are corresponding ions of some metal ions, thereby preparing ceramic pigment precursor particles to be used as ink. These react at low temperatures, and thus, although the ceramic pigment precursor particles were not complete ceramic pigment particles, since color expression can be realized after plasticization, it showed the possibility of a mixed form of precursor/pigment.

Therefore, there is a need to develop a ceramic ink having excellent dispersibility, stability and high ink color depth, that can solve the aforementioned problems of prior art.

### [Prior Art Documents]

### [Patent Documents]

(Patent Document 1) Japanese Patent Laid-open Publication No. 2008-222962
(Patent Document 2) US Registered Patent Publication No. 6,402,823
(Patent Document 3) US Registered Patent Publication No. 7,316,741

### [Non-Patent Documents]

(Non-Patent Document 1) M. Blosi et al., Dyes and Pigments 94 (2012) 355-362
(Non-Patent Document 2) S. Mestre et al., J Euro Ceramic Soc., 32 (2012) 2825-2830

### Summary

Therefore, a purpose of the present invention is to provide a method for preparing ceramic ink having excellent dispersibility, stability and high ink color depth, using metal carbamate ink and ceramic pigment.

In addition, another purpose of the present invention is to provide the ceramic ink having excellent dispersibility, stability and high ink color depth.

In order to achieve the aforementioned purposes, one aspect of the present invention provides a method for preparing ceramic ink, the method including: preparing a metal carbamate solution by dissolving metal carbamate in a solvent; preparing a ceramic pigment by plasticizing metal carbamate; and mixing the metal carbamate solution, the ceramic pigment and a dispersant.

The method for preparing ceramic ink according to one aspect may further include pulverizing the obtained mixture of the metal carbamate solution, the ceramic pigment and the dispersant in an ultrasonic oscillator, after the step of mixing the metal carbamate solution, the pigment and the dispersant.

In the method for preparing ceramic ink, the metal carbamate may be prepared by a method comprising preparing a metal precursor solution by dissolving a metal salt or its hydrate in a solvent; preparing an ammonium carbamate solution by dissolving ammonium carbamate in a solvent; preparing the metal carbamate by mixing the obtained metal precursor solution and the obtained ammonium carbamate solution; and mixing two or more kinds of the prepared metal carbamate. In addition, the metal carbamate may be prepared by a method comprising preparing a metal precursor solution by dissolving two kinds or more metal salts or their hydrate in a solvent; preparing an ammonium carbamate solution by dissolving ammonium carbamate in a solvent; and preparing the metal carbamate by mixing the obtained metal precursor solution and the obtained ammonium carbamate solution.

The metal salt may be one or more kinds selected from a group consisting of copper oxide, copper chloride, copper acetate, copper nitrate, copper sulfate, iron oxide, iron chloride, iron acetate, iron nitrate, iron sulfate, cobalt chloride, cobalt acetate, cobalt nitrate, cobalt sulfate, nickel chloride, nickel acetate, nickel nitrate, nickel sulfate, manganese oxide, manganese chloride, manganese acetate, manganese nitrate, manganese sulfate, aluminum chloride, aluminum acetate, aluminum nitrate, aluminum sulfate, calcium oxide, calcium chloride, calcium acetate, calcium nitrate, calcium sulfate, tin oxide(II), tin chloride(II), tin acetate(II), tin nitrate(II) and tin sulfate(II).

The ammonium carbamate may be one or more kinds selected from a group consisting of ethylammonium ethylcarbamate, isopropylammonium isopropylcarbamate, n-butylammonium n-butylcarbamate, isobutylammonium isobutylcarbamate, tert-butylammonium tert-butylcarbamate, 2-ethylhexylammonium 2-ethylhexylcarbamate, octadecylammonium octadecylcarbamate, 2-methoxyethylammonium 2-methoxyethylcarbamate, 2-cyanoethylammonium, 2-cyanoethylcarbamate, dibutylammonium dibutylcarbamate, dioctadecylammonium dioctadecylcarbamate, methyldecylammonium methyldecylcarbamate, hexamethyleneimineammonium hexamethyleneiminecarbamate, mopolynium mopolylenecarbamate, pyridium ethylhexylcarbamate, triethylenediaminium isopropylcarbamate, benzylammonium benzylcarbamate and triethoxysilylpropylammonium triethoxysilylpropylcarbamate.

The metal salt or its hydrate, and the solvent in which the ammonium carbamate is dissolved may be a polar solvent or non-polar solvent. The polar solvent may be one or more kinds selected from the group consisting of ethanol, methanol, acetone and water, and the non-polar solvent may be one or more kinds selected from the group consisting of an alkane solvent selected from hexane, heptanes, octane, decane and cyclohexane, an aromatic alkane selected from benzene, toluene, xylene and anisole, and an acetate monoalkyl ether of chloroform, methylene chloride, ethyl acetate, ethylene glycol diethylether, diethylether, and diethylene glycol.

Further, in the method for preparing ceramic ink, the metal carbamate may be a composite including two or more kinds of the metal carbamate.

The metal carbamate may be one or more kinds selected from a group consisting of nickel(II) di(2-ethylhexylcarbamate), manganese(II) di(2-ethylhexylcarbamate), cobalt(II) di(2-ethylhexylcarbamate), iron(III) tri(2-ethylhexylcarbamate), chrome(III) 2-ethylhexylcarbamate, aluminum(III) tri(2-ethylhexylcarbamate), tin(IV) di(2-ethylhexylcarbamate) and calcium(II) di(2-ethlyhexylcarbamate).

In the method for preparing ceramic ink, the ceramic pigment being mixed may be 3 to 10 wt% per 100wt% of a final ceramic ink.

In the method for preparing ceramic ink, the dispersant being mixed may be 0.5 to 2 times weight of a weight of the ceramic pigment contained in the ceramic ink. The dispersant may be one or more kinds selected from a group consisting of polyvinylpyrrolidone, pyrrolidone/acrylic acid copolymer, pyrrolidone/methacrylic acid copolymer, styrene/acrylic acid copolymer, styrene/methacrylic acid copolymer, styrene/maleic anhydride copolymer, acrylic acid alkylester/acrylic acid copolymer, methacrylic acid alkylester/acrylic acid copolymer, polyvinyloxazoline, polyvinylamidazole, polyethyleneglycol and polypropyleneglycol.

In the method for preparing ceramic ink, the solvent for dissolving the metal carbamate may be one or more kinds selected from a group consisting of methylcarbitol, ethylcarbitol, propylcarbitol, butylcarbitol, alkylcellosolve, dipropyleneglycol alkylether, carbitol monoalkylacetate, propyleneglycol monoalkylether, ethylenecarbonate, propylenecarbonate, butanol, pentanol, hexanol and 2-ethylhexanol.

In the method for preparing ceramic ink, the plasticizing of metal carbamate may be performed by a primary plasticizing step at 100°C to 300°C, and a secondary plasticizing step at 300°C to 1500°C.

The method for preparing ceramic ink may further comprise removing the solvent from the mixed solution obtained by mixing the metal precursor solution and the ammonium carbamate solution.

Another aspect of the present invention provides the ceramic ink being prepared by the method for preparing ceramic ink of the present invention.

A particle diameter of the ceramic pigment included in the ceramic ink may be 50 to 150 nm.

According to the method for preparing ceramic ink of the present invention, it is possible to easily prepare a ceramic ink that maintains dispersion stability by dispersing pigment of an insufficient amount in a ceramic precursor ink, and that also has excellent stability and solubility. Further, in the ceramic ink prepared according the present invention, the content of metal solid matter in the ceramic precursor ink can be increased, allowing an in depth color expression, and also reduce the effect of dilution of color expression that may otherwise be caused by the glaze after plasticization.

### Brief description of the drawings

FIG. 1 is a thermal analysis graph using (a) TGA and (b) DSC of a cobalt(II)/aluminum(III) 2-ethylhexylcarbamate mixture complex.
FIG. 2 shows an XRD spectra of the cobalt(II)/aluminum(III) 2-ethylhexylcarbamate mixture complex according to the plasticizing temperature.
FIG. 3 is an SEM photograph of a CoAl₂O₄ blue color ceramic pigment obtained from plasticization of the cobalt(II)/aluminum(III) 2-ethylhexylcarbamate mixture complex.
FIG. 4 is a TEM photograph of an ink where the CoAl₂O₄ blue color ceramic pigment obtained from the plasticization of the cobalt (II)/aluminum(III) 2-ethylhexylcarbamate mixture complex is dispersed.

### Detailed description

Advantages and characteristics of the present invention and the method for achieving those advantages and characteristics will become apparent with reference to the embodiments that will be explained in detail hereinbelow, together with the attached drawings. However, the present invention is not limited to the embodiments that will be disclosed hereinbelow, but may be realized in various different forms. The present embodiments are provided just to complete the explanation of the present invention, and to let a person skilled in the art completely understand the scope of the present invention.

Unless defined otherwise, all the terms (including technical and scientific terms) used in the present specification will have meanings that should be commonly understood by a person skilled in the art. Further, unless clearly and specially defined otherwise, the terms defined in general dictionaries should not be interpreted ideally or to the extreme.

Hereinbelow, a method for preparing ceramic ink and the ceramic ink prepared by the same according to the present invention will be explained in detail.

The method for preparing ceramic ink according to one specific embodiment of the present invention may include preparing a metal carbamate solution by dissolving metal carbamate in a solvent; preparing a pigment by plasticizing the metal carbamate; and mixing the metal carbamate solution, the ceramic pigment and a dispersant.

The method for preparing ceramic ink may further include pulverizing the mixture obtained from the step of mixing the metal carbamate solution, the ceramic pigment and the dispersant, after that mixing step. Pulverizing the mixture may be performed by, for example, ball milling, and preferably, in an ultrasonic oscillator after having the mixture contact zirconia balls.

In the aforementioned method for preparing ceramic ink, the metal carbamate used for preparing the metal carbamate solution and the metal carbamate used for preparing the pigment may be the same or different metal carbamates. In one embodiment, in order to prepare the metal carbamate solution, a metal carbamate was prepared, and then a portion of the prepared metal carbamate was plasticized to prepare a pigment. In another embodiment, a metal carbamate, that is different from the one used for preparing the metal carbamate solution, was prepared and then plasticized to prepare the pigment.

The metal carbamate may be prepared by a method including: preparing a metal precursor solution by dissolving a metal salt or hydrate of the metal salt in a solvent; preparing an ammonium carbamate solution by dissolving an ammonium carbamate in a solvent; preparing the metal carbamate by mixing the obtained metal precursor solution and the obtained ammonium carbamate solution; and mixing two or more kinds of the prepared metal carbamate. Otherwise, the metal carbamate may be prepared by a method including: preparing a metal precursor solution by dissolving two or more kinds of metal salt or hydrates of the two or more kinds of metal salt in a solvent; preparing an ammonium carbamate solution by dissolving an ammonium carbamate in a solvent; and preparing the metal carbamate by mixing the obtained metal precursor solution and the obtained ammonium carbamate solution.

The aforementioned method for preparing the metal carbamate may further include removing the solvent from the mixture solution obtained by mixing the metal precursor solvent and the ammonium carbamate solution.

In the aforementioned method for preparing the metal carbamate, the metal salt may be, for example, one or more kinds selected from a group consisting of metal salts such as copper oxide, copper chloride, copper acetate, copper nitrate, copper sulfate, iron oxide, iron chloride, iron acetate, iron nitrate, iron sulfate, cobalt chloride, cobalt acetate, cobalt nitrate, cobalt sulfate, nickel chloride, nickel acetate, nickel nitrate, nickel sulfate, manganese oxide, manganese chloride, manganese acetate, manganese nitrate, manganese sulfate, aluminum chloride, aluminum acetate, aluminum nitrate, aluminum sulfate, calcium oxide, calcium chloride, calcium acetate, calcium nitrate, calcium sulfate, tin oxide(II), tin chloride(II), tin acetate(II), tin nitrate(II) and tin sulfate(II). Further, the metal salt may be one or more kinds selected from a group consisting of metal salts chloride, for example, iron chloride, nickel chloride, cobalt chloride, magnesium chloride, magnesium chloride, manganese chloride, iron chloride, chrome chloride, tin chloride (II) and calcium chloride.

In the aforementioned method for preparing the metal carbamate, the ammonium carbamate may be one or more kinds selected from a group consisting of ethylammonium ethylcarbamate, isopropylammonium isopropylcarbamate, n-butylammonium n-butylcarbamate, isobutylammonium isobutylcarbamate, tert-butylammonium tert-butylcarbamate, 2-ethylhexylammonium 2-ethylhexylcarbamate, octadecylammonium octadecylcarbamate, 2-methoxyethylammonium 2-methoxyethylcarbamate, 2-cyanoethylammonium, 2-cyanoethylcarbamate, dibutylammonium dibutylcarbamate, dioctadecylammonium dioctadecylcarbamate, methyldecylammonium methyldecylcarbamate, hexamethyleneimineammonium hexamethyleneiminecarbamate, mopolynium mopolylenecarbamate, pyridium ethylhexylcarbamate, triethylenediaminium isopropylcarbamate, benzylammonium benzylcarbamate and triethoxysilylpropylammonium triethoxysilylpropylcarbamate. Preferably, it may be ethylammonium ethylcarbamate, isopropylammonium isopropylcarbamate, n-butylammonium n-butylcarbamate, isobutylammonium isobutylcarbamate, tert-butylammonium tert-butylcarbamate or 2-ethylhexylammonium 2-ethylhexylcarbamate, and particularly preferably, it may be 2-ethylhexylammonium 2-ethylhexylcarbamate.

The solvent where the metal salt or hydrate of the metal salt, and the ammonium carbamate may be dissolved may a polar solvent or non-polar solvent. The polar solvent may be one or more kinds selected from a group consisting of ethanol, methanol, acetone and water. The non-polar solvent may be one or more kinds selected from a group consisting of an alkane solvent selected from hexane, heptane, octane, decane and cyclohexane, an aromatic alkane selected from benzene, toluene, xylene and anisole, and an acetate monoalkyl ether of chloroform, methylene chloride, ethyl acetate, ethylene glycol diethylether, diethyl ether and diethylene glycol. The solvent where the metal salt or hydrate of the metal salt may be dissolved may preferably be a polar solvent, and particularly preferably, water. The solvent where the ammonium carbamate may be dissolved may preferably be a non-polar solvent, and particularly preferably, hexane.

In an embodiment, the carbamate-based organic metal precursor may be prepared by a phase transfer reaction between a metal salt that may be dissolved in water and alkylammonium alkylcarbamate that may be dissolved in an organic solvent that does not mix with water. Here, the metal salt is representatively chloride ion, that corresponds to any water soluble salt such as brome, nitrate, sulfate, acetate, perchlorate, phosphate, and carbonate ion, and the solvent that does not mix with water may be an alkane solvent of hexane, heptane, octane, decane, dodecane, decaline and cyclohexane, and an aromatic alkane such as benzene, benzene chloride, toluene, xylene, alkylbenzen (C2-C12) and anisole. Otherwise, the metal salt may include chloroform, methylene chloride, 1,2-dichloroethylene, ethyl acetate and ethylene glycol, or an ester compound of an acetate of diethylene glycol, or mono or dialkyl (C1-C4) ether derivative and the like. The reaction is performed at room temperature, and a magnetic stirrer or homogenizer and the like may be used to promote the reaction at surface. The used alkylammonium alkylcarbamate is dissociated into carbamate negative ions and ammonium ions in the organic solvent, whereas the metal salt is dissociated into metal positive ions and negative ions. In each of the ions dissociated as aforementioned, an exchange of negative ions and positive ions is performed at surface, where the ammonium positive ions in the organic solvent react with the negative ions that were corresponding ions of the metal inside the aqueous solution, to generate ammonium-negative ions that will exist in an aqueous solution layer. Meanwhile, the carbamate negative ions, in the organic solvent, react with the metal positive ions inside the aqueous solution, to form a metal carbamate that will be dissolved in the organic solvent. By this reaction, carbamate derivatives of metal salt that do not mix with water can be easily obtained.

In one embodiment, the alkylammonium alkylcarbamate of alkyl carbamic acid may be prepared by a reaction between the corresponding alkylamine and CO₂, in which case a slightly excessive amount of amine may be used. The alkylamine may be an alkylamine of carbons from C2 to C12. The shorter the length of the carbons, the lower the solubility of the alkylammonium alkylcarbamate in the non-polar solvent. To the contrary, the longer the length of the carbons, the higher the solubility of the alkylammonium alkylcarbamate. However, the higher the oxidation number obtained as a result of the aforementioned, the higher the number of carbamate, thereby causing the content of solid matter metal salt forming the entirety of ceramic ink ingredient to decrease, and therefore, the ratio of the ingredients must be adjusted suitably when being mixed. Further, the alkylamine has a carbon number of C2-C12, and there is always an effect when each carbon number as branches. For example, in the case of alkylamine of C3, n-propylamine and isopropylamine belong to such cases, and in the case of C4, n-butylamine, isobutylamine, tert-butylamine and sec-butylamine belong to such cases. In the case of C5, n-pentylamine, isopentylamine, tert-pentylamine, neopentylamine and sec-pentylamine belong to such cases. All the n-, iso-, tert-, neo- and sec- compounds belong to cases of amines belonging to C6-C12, and the primary amines of all isomers having methyl radicals from carbon number 2 to 10, and ethyl radicals from carbon number 2 to 9 belong to such cases. Further, the alkylamine being used may be a secondary amine instead of the primary amine, and there is always an effect when there are branches as the aforementioned primary amine in each carbon number of C2 to C12. For example, in the case of C3, n-propylamine and isopropylamine belong to such cases. In the case of C4, n-butylamine, isobutylamine, tert-butylamine and sec-butylamine belong to such cases. In the case of C5, n-pentylamine, isopentylamine, tert-pentylamine, neopentylamine and sec-pentylamine belong to such cases. All the aforementioned n-, iso-, tert-, neo- and sec- compounds belong to cases of amines belonging to C6 to C12, and in carbon number 2, secondary amines of all isomers having ethyl radicals from carbon number 2 to 9 belong to such cases. Besides the aforementioned, etheramine of C2 to C10 such as 2-methoxyethylamine and 2-methoxypropylamine, annular alkylamines such as cyclohexylamine and cyclopentylamine, and aralkylamines such as benzylamine belong to such cases.

In the method for preparing ceramic ink according to the present invention, an antimony compound, tin compound or titanium compound may be further added at the step of preparing the metal carbamate solution or the step of preparing the ceramic pigment. The antimony compound may be one or more selected from a group consisting of antimonyalkylcarboxylate (here, alkyl is an alkyl of carbon number 1 to 12), antimonycitrate, antimonyacetylacetonate and antimonyethylacetoacetate. The tin compound may be one or more selected from a group consisting of dibutyltindilaurate, tindioctoate, tinalkylcarboxylate (here, the alkyl is an alkyl of carbon numbers 1 to 12), tin(II)acetylacetonate, tin(II) acetylacetoacetate and tin(IV) bis(acetylacetonate)dichloride. The titanium compound may be one or more selected from a group consisting of triethanolaminetitanium complex, tetraalkoxytitanium (here, the alkyl is an alkyl of carbon numbers 1 to 6), titaniumoxyacetylacetonate, titaniumoxyethylacetoacetate, and titaniumdialkoxidebis(acetylacetonate)dichloride (here, the alkyl is an alkyl of carbon numbers 1 to 6).

In one specific embodiment, as the metal precursor for expressing black color, any of the electric potential metal ions of nickel(II), copper(II), cobalt(II), iron(III) and chrome(III) may form the carbamate complex. Three kinds of metals: nickel(II), manganese(II) and cobalt(II) each have an oxidation number of 2, and may thus react with EHAEBC to form nickel(II) 2-ethylhexylcarbamate, copper(II) 2-ethylhexylcarbamate diamine complex, cobalt(II) 2-ethylhexylcarbamate, respectively. Especially, copper is obtained in the form of Cu(NHCR)₂(OOCNHR)₂, and in the case of Fe and Cr, which are trivalent metals, iron(III) 2-ethylhexylcarbamate complex and chrome(III) 2-ethylhexylcarbamate complex are formed as Fe₂(NHCR)₂(OOCNHR)₄ and Cr₂(NHCR)₂(OOCNHR)₄, respectively.

The carbon numbers (length) of the alkyl radicals of the alkylcarbamate that act as negative ions may be adjusted. Likewise, the alkylammonium alkylcarbamate of carbon numbers C2 to C8 may be prepared by a reaction between the corresponding alkylamine and CO₂. The alkylammonium alkylcarbamate of different carbon numbers synthesized in the aforementioned method may be mixed in suitable ratios and be used to prepare the metal carbamates. In this case, when a long chain and a short chain are mixed and combined with polyvalent metal salts, crystallization is prevented, thereby maintaining the state that can be easily dissolved in the organic solvent and the stability of solution for a long period of time. Meanwhile, the smaller the carbon number, that is, close to C4, the smaller the yield of the organic matter, thereby serving to relatively increase the content of the metal ions.

Further, in the method for preparing ceramic ink of the present invention, the metal carbamate may be a composite including two or more kinds of metal carbamates. In one embodiment, a metal carbamate solution and ceramic pigment were prepared using a metal 2-ethylhexylcarbamate complex including two or more kinds of metal 2-ethylhexylcarbamates.

Further, the metal carbamate may be one or more kinds selected from a group consisting of nickel(II) di(2-ethylhexylcarbamate), manganese(II) di(2-ethylhexylcarbamate), cobalt(II) di(2-ethylhexylcarbamate), iron(III) tri(2-ethylhexylcarbamate), chrome(III) 2-ethylhexylcarbamate, zinc(II) di(2-ethylhexylcarbamate), magnesium(II) di(2-ethylhexylcarbamate), aluminum(III) tri(2-ethylhexylcarbamate), praseodymium(III) tri(2-ethylhexylcarbamate), zirconium(IV) di(2-ethylhexylcarbamate)oxide, tin(IV) tetra(2-ethylhexylcarbamate) and calcium(II) di(2-ethylhexylcarbamate).

In the method for preparing ceramic ink, per 100% of the total ceramic ink weight, 1 to 20 wt% of ceramic pigment, and preferably, 2 to 10 wt% of ceramic pigment may be mixed. If less than 1 wt% of pigment is mixed, there is no in depth color effect, and if more than 20 wt% of pigment is mixed, the dispersion performance may deteriorate and make the ceramic ink unstable.

In the method for preparing ceramic ink, a dispersant of 0.5 to 2.0 times weight, and preferably, 1 to 1.5 times weight of the ceramic pigment contained in the ceramic ink, may be mixed. The dispersant may include one or more kinds selected from a group consisting of, for example, polyvinylpyrrolidone (PVP), pyrrolidone/acrylic acid copolymer, pyrrolidone/methacrylic acid copolymer, styrene/acrylic acid copolymer, styrene/methacrylic acid copolymer, styrene/maleic anhydride copolymer, acrylic acid alkylester/acrylic acid copolymer, methacrylic acid alkylester/acrylic acid copolymer, polyvinyloxazoline, polyvinylimidazole, polyethyleneglycol and polypropyleneglycol, and may preferably include polyvinylpyrrolidone. Further, the dispersant may include a dispersant for industrial use. For example, DISPERBYK-111, DISPERBYK-161, DISPERBYK-163, DISPERBYK-185, DISPERBYK-2001, DISPERBYK-187, DISPERBYK-190, DISPERBYK-109, DISPERBYK-2163, DISPERBYK-184, DISPERBYK-161, DISPERBYK-163, DISPERBYK-185, DISPERBYK-2001, DISPERBYK-187, DISPERBYK-190, DISPERBYK-109, DISPERBYK-2163, DISPERBYK-184, DISPERBYK-2155, DISPERBYK-180, DISPERBYK-194 N, TEGO® Dispers 755 W, Efka® PX 4300, Efka® PX 4320, Efka PX 4340, and TEGO® Dispers 655 may be used as the dispersant, solely or in combinations of two or more. The aforementioned dispersant may particularly preferably be a combination of polyvinylpyrrolidone and DISPERBYK-111.

In the aforementioned method for preparing ceramic ink, the solvent for dissolving the metal carbamate may be an intermediate/high boiling point solvent. For example, the solvent may be one or more kinds selected from a group consisting of methylcarbitol, ethylcarbitol, propylcarbitol, butylcarbitol, alkylcellosolve, dipropyleneglycol alkylether, carbitol monoalkylacetate, propyleneglycol monoalkylether, ethylenecarbonate, propylenecarbonate, butanol, pentanol, hexanol and 2-ethylhexanol. Preferably, the solvent may be butylcarbitol.

The method for preparing ceramic ink includes preparing the ceramic pigment by plasticizing the metal carbamate. At this step, plasticizing the metal carbamate may consist of two steps of plasticizing. The primary plasticizing step may be performed at 100°C to 300°C, and preferably at 200°C to 300°C. By performing the primary plasticizing step, the remaining high boiling point organic matter and organic remnants may be removed. The secondary plasticizing step may be performed at 300°C to 1500°C. Through the secondary plasticizing step, the organic negative ions and remaining chelated compound may be decomposed or removed, and crystals may be grown.

Another aspect of the present invention provides the ceramic ink being prepared by the aforementioned method for preparing ceramic ink. This method for preparing ceramic ink is the same as aforementioned.

The ceramic ink of the present invention is what includes nano size ceramic pigment, and particularly, it is a ceramic ink with a form where the ceramic pigment is dispersed in a non-particle metal precursor solution. The ceramic pigment consists of metal oxide where transition metal ions or rare-earth ions are doped. The oxidized state of the metal, coordinate number or the partially filled d or f block atoms also determine the properties of the color of the ceramic pigment. The present invention relates to such a ceramic ink where a pigment prepared by plasticizing the ceramic ink is dispersed, the ceramic ink forming the carbamate precursor forming a stable solution prepared by easily dissolving, in an organic solvent, the metal acting as a dopant and the precursors of metal oxides acting as hosts.

The ceramic pigment included in the ceramic ink of the present invention may have, for example, a particle diameter of 10 to 300nm, and preferably a particle diameter of 10 to 150nm.

Hereinbelow, the present invention will be explained in detail through Examples and experiment results implemented to prove the excellence of the method for preparing ceramic ink of the present invention. However, the Examples are provided for exemplary purpose, and thus the present invention is not limited to the Examples hereinbelow.

### <Preparing Raw Materials>

In order to synthesize a metal carbamate as a precursor of metal oxide, 2-ethylhexylammonium 2-ethylhexylcarbamate (EHAEHC) was used. The EHAEHC was directly synthesized and used. Specifically, 2-ethylhexylamine (60 mL) and dried 2-propanol (240 mL) were put into a 2-neck round bottom flask (500 mL), and then CO₂ gas (50 mL/min) was slowly injected using a syringe needle and then stirred and bubbled for 1 hour. If no further reaction occurred after injecting the CO₂ gas, the solvent was removed using a rotating evaporator at 40°C or below, thereby obtaining a transparent liquid phase EHAEHC.

### <Measuring Properties>

Differential scanning calorimetry (DSC) and a thermogravimetric analysis (TGA) were used in order to analyze the precursor of the metal oxide and the thermal characteristics of the metal oxide. A Sinco Evo Setaram DSC 131 and Shimadzu TGA 50 were used for the measurements performed at a heating rate of 10°C per minute under a nitrogen atmosphere.

CuK_{α} line was examined from an X-ray diffraction spectrum at a scanning rate of 2°C per minute using a Shimadzu XD-D1 X-ray diffractometer. 0.5 ml of ink was taken in order to measure its viscosity at 20 rpm and 25°C using a Brookfield Viscometer, and the surface tension was measured by a K20(Easy dyne) made by KRUSS.

Using dynamic light scattering, particle dispersion was measured on a butylcarbitol solvent where the ink was diluted to 10%. Further, color coordinates were measured in SCI mode using a spectrocolorimeter CM-5 made by Konica Milota.

### <Preparing Non-particle Type Ceramic Precursor Ink>

### [Preparative example 1] Preparing Ni/Cu/Co/Fe/Cr group black color ceramic precursor ink

Nickel chloride hydrate (NiCl₂·6H₂0, 166.4 g, 0.7 mol), copper chloride hydrate (CuCl₂·2H₂0, 51.1g, 0.3 mol), cobalt chloride hydrate (COCl₂·6H₂0, 71.4 g, 0.3 mol), iron chloride hydrate (FeCl₃·6H₂0, 135.2 g, 0.5 mol) and chrome chloride hydrate (CrCl₃·6H₂0, 133.2 g, 0.5 mol) were dissolved in distilled water (12 L), and EHAEHC (2042 g, 6.8 mol) was dissolved in hexane (15 L). Then, the solution where the 5 types of mixed metal salts are dissolved was slowly dripped into the solution where EHAEHC was dissolved. This mixed solution was mixed for 1 hour using a homogenizer, and then a hexane layer was separated and washed for 3 times with distilled water. Then, hexane was removed using a rotating evaporator, thereby obtaining a mixed carbamate complex of Ni/Cu/Co/Fe/Cr 2-ethylhexylcarbamate. 300g of the obtained black color mixed carbamate was dissolved in 700g of butylcarbitol, thereby preparing a transparent black color ceramic ink.

Plasticization of the ink prepared as aforementioned was performed at a temperature of 1,000 to 1,250°C, and color expression was identified. After plasticizing the entirety of the ink, the content of solid matter was 3 wt%. Further, the same plasticizing temperature condition was applied when preparing precursor ink of other colors hereinbelow.

### [Preparative example 2] Preparing Co/Cu group blue color ceramic precursor ink

Cobalt chloride hydrate (COCl₂·6H₂0, 47.6 g, 0.2 mol) and copper chloride hydrate (CuCl₂·2H₂0, 340.9 g, 2 mol) were dissolved in distilled water (9 L), and EHAEHC (1664 g, 5.5 mol) was dissolved in hexane (11.5 L) by stirring using a magnetic stirrer. The aqueous solution where metal salts were dissolved was dripped into the solution where EHAEHC was dissolved. This mixed solution was stirred at 1000 rpm for 30 minutes, and then the hexane was layer separated and washed with distilled water. Then, after removing the solvent using a rotating evaporator, blue color liquid phase Co/Cu 2-ethylhexylcarbamate having viscosity was obtained. 320g of the blue color mixed carbamate obtained was dissolved in 680g of butylcarbitol, thereby preparing 5 wt% of solid phase non-particle type blue color ceramic precursor ink.

### [Preparative example 3] Preparing Cr/Sb/Ti group yellow color ceramic precursor ink

Chrome chloride hydrate (CrCl₃·6H₂0, 7.95 g, 30 mmol) was dissolved in distilled water (90 mL), and EHAEHC (31.8 g, 105 mmol) was dissolved in diethylether (150 mL). The aqueous solution where chrome salt was dissolved was dripped into the solution where EHAEHC was dissolved. This mixed solution was mixed for 10 minutes using a homogenizer. The diethylether layer was separated and washed with distilled water for 3 times. Then, after removing the diethylether using a rotating evaporator, a colorless liquid phase chrome(III) 2-ethylhexylcarbamate having viscosity was obtained. In the synthesized chrome carbamate precursor, antimony triacetate (Sb(CH₃COO)₂; 29.9 g, 0.1 mol) and triethanolamine titanium complex (125.6g) were mixed, and 300g of the yellow color mixed carbamate obtained was dissolved in 700g of butylcarbitol, thereby preparing 6 wt% of solid phase non-particle type yellow color ceramic precursor ink.

### [Preparative example 4] Preparing Cr/Sn group red color ceramic precursor ink

Chrome chloride hydrate (CrCl₃·6H₂0, 5.3 g, 20 mmol) was dissolved in distilled water (60 mL), and EHAEHC (21.2 g, 70 mmol) was dissolved in diethylether (100 mL). The aqueous solution where chrome salt was dissolved was dripped into the solution where EHAEHC was dissolved. This mixed solution was stirred for 10 minutes using a homogenizer. After separating the diethylether layer and washing the separated diethylether layer 3 times with distilled water, the diethylether was removed using a rotating evaporator, thereby obtaining a colorless liquid phase chrome(III) 2-ethylhexylcarbamate having viscosity. In the synthesized chrome carbamate precursor, tin dioctoate (Sn(Oct)₂; 397g, 0.98 mol) was mixed, and 300g of the red color mixed carbamate obtained was dissolved in 700g of butylcarbitol, thereby preparing 11 wt% of solid phase non-particle type red color ceramic precursor ink.

### <Preparing Ceramic Pigment>

### [Preparative example 5] Preparing black color ceramic pigment

The mixed carbamate complex of Ni/Cu/Co/Fe/Cr 2-ethylhexylcarbamate in [Preparative example 1] from which the solvent has been completely removed was put into a crucible, and in an electric oven, the temperature was raised at a plasticizing speed of 5°C/min. The plasticization was performed in two steps. At the first plasticizing step, as the temperature reached 200°C, an intense decomposition occurred, thereby generating gas, and plasticization proceeded and was maintained for 1 hour so that the remaining high boiling point organic matter can be removed first. The resulting products of the first step were taken out and pulverized, and then at the secondary plasticization, the plasticizing temperature was raised up to 350°C and maintained for 2 hours in order to decompose/remove all the organic negative ions and remaining chelated compounds, and grow crystals. Finally, a black color ceramic pigment was obtained. 40g of the black color pigment prepared was put into a ball mill port (500 mL), and each of 500g of zirconia balls (diameters 10mm and 3mm) were put in, and then 80g of distilled water was added and ball milling was performed for 48 hours. The size of the obtained black color pigment was 50 to 150 nm.

### [Preparative example 6] Preparing blue color ceramic pigment

Cobalt chloride hydrate (COCl₂·6H₂0, 47.6 g, 0.2 mol) and aluminum chloride hydrate (AlCl₃·6H₂0, 96.5 g, 0.4 mol) were dissolved in distilled water (4.5 L), and EHAEHC (484 g, 1.6 mol) was dissolved in hexane (5 mL) using a stirrer. The aqueous solution where the metal salt was dissolved was dripped into the solution where EHAEHC was dissolved. This mixed solution was stirred for 30 minutes at 1000 rpm. After separating the hexane layer and washing the separated hexane layer with distilled water, the solvent was removed using a rotating evaporator, thereby obtaining a blue color liquid phase Co/AI 2-ethylhexylcarbamate having viscosity. The mixed carbamate complex was primarily put into a crucible, and in an electric oven, the temperature was raised at a plasticizing speed of 5°C/min. The plasticization was performed in two steps. At the first plasticizing step, plasticization was performed until the temperature reached 300°C to first remove the remaining high boiling point organic matter and destruct the carbamate binding with the metal, thereby removing the organic remnants. The resulting products of the first step were taken out and pulverized, and then at the secondary plasticization step, the plasticizing temperature was raised up to 1200°C and maintained for 2 hours in order to decompose/remove all the organic negative ions and the remaining chelated compoundm and grow crystals. Finally, a blue color ceramic pigment was obtained. 40g of the blue color pigment prepared was put into a ball mill port (500 mL), and each of 500g of zirconia balls (diameters 10mm and 3mm) were put in, and then 80g of distilled water was added and ball milling was performed for 48 hours. The size of the obtained blue color pigment was 50 to 150 nm.

### [Preparative example 7] Preparing yellow color ceramic pigment

The chrome(III) 2-ethylhexylcarbamate, antimonytriacetate (Sb(CH₃COO)₂), triethanoltitanium complex and calcum(II) 2-ethylhexylcarbamate prepared in [Preparative example 3] were mixed, and then the mixed metal complex was first put into a crucible, and in an electric oven, the temperature was raised at a plasticizing speed of 5°C/min to perform the plasticization in two steps. At the first plasticizing step, the temperature was raised up to 200°C and maintained for 1 hour to first remove the remaining high boiling point organic matters and destruct the carbamate binding with the metal, thereby removing the organic remnants. The resulting products of the first step were taken out and pulverized, and then at the secondary plasticization step, the plasticizing temperature was raised up to 350°C and maintained for 2 hours in order to decompose/remove all the organic negative ions and remaining chelated compound, and grow crystals. Finally, a yellow color ceramic pigment was obtained. 40g of the yellow color pigment prepared was put into a ball mill port (500 mL), and each of 500g of zirconia balls (diameters 10mm and 3mm) were put in, and then 80g of distilled water was added and ball milling was performed for 48 hours. The obtained yellow color pigment had nano sizes of 50 to 150 nm.

### [Preparative example 8] Preparing red color ceramic pigment

The mixed metal complex where chrome(III) 2-ethylhexylcarbamate and tin dioctoate (Sn(Oct)₂; 397 g, 0.98 mol) were mixed in [Preparative example 4] was first put into a crucible, and in an electric oven, the temperature was raised at a plasticizing speed of 5°C/min to perform the plasticization in two steps. At the first plasticizing step, plasticization was performed until the temperature reached 200°C and maintained for 1 hour to first remove the remaining high boiling point organic matters and destruct the carbamate binding with the metal, thereby removing the organic remnants. The resulting products of the first step were taken out and pulverized, and then at the secondary plasticization, the plasticizing temperature was raised up to 350°C and maintained for 2 hours in order to decompose/remove all the organic negative ions and the remaining chelated compound, and grow crystals. Finally, a red color ceramic pigment was obtained. 40g of the red color pigment prepared was put into a zirconia ball mill port (500 mL), and each of 500g of zirconia balls (diameters 10mm and 3mm) were put in, and then 80g of distilled water was added and ball milling was performed for 48 hours. The obtained red color pigment had nano sizes of 50 to 150 nm.

### <Preparing Ceramic Ink>

### [Example 1] Preparing black color precursor/pigment ink

The pulverized black color pigment nano particles of [Preparative example 5] were mixed into the non-particle black color ceramic precursor ink obtained in [Preparative example 1] until the final pigment solid matter was 6 wt%. Polyvinylpyrrolidone (PVP; MW=40,000) and BYK111 were used as dispersants, and the amount of the dispersants used was within a range of 1:1 to 1.5 to the weight of the pigment particles. In order to enhance the dispersibility, zirconia balls (0.3 mm to 1 mm) were put into the container, and the contents were mixed and pulverized at the same time in an ultrasonic oscillator for 12 hours or more. If the viscosity of the dispersed solution was high, the non-particle type black color ceramic precursor ink was added or reduced and then mixed to adjust the viscosity. The properties of the final ink were measured, and then the final ink was coated on glaze ceramics to identify the color expression characteristics.

### [Example 2] Preparing blue color ceramic precursor/pigment ink

The pulverized blue color pigment nano particles of [Preparative example 6] were mixed in the non-particle type blue color ceramic precursor ink obtained in [Preparative example 2] until the final pigment solid matter reached 6 wt%. For dispersion of the transparent blue color pigment, PVP(MW=10,000) and BYK111 were added as dispersants, the amount of the dispersants used being within a range of 1:1 to 1.5 to the weight of the pigment particles. In order to enhance the dispersibility of the ceramic pigment particles, zirconia balls (0.3 mm to 1 mm) were added, and the contents were mixed and pulverized at the same time in an ultrasonic oscillator for 12 hours or more. Inkjet characteristics such as the viscosity and surface tension of the dispersed solution were adjusted by adding or reducing the non-particle type blue color ceramic precursor ink. Then the ink was coated on glaze ceramics to identify the color expression characteristics.

### [Example 3] Preparing yellow color ceramic precursor/pigment ink

The pulverized yellow color ceramic pigment nano particles of [Preparative example 7] were mixed in the non-particle type yellow color ceramic precursor ink obtained in[Preparative example 3] until the final pigment solid matter reached 10 wt%. In order to enhance the dispersibility of the mixed pigment, PVP(MW=10,000) and BYK111 were added as dispersants, the amount of the dispersants used being within a range of 1:1 to 1.5 to the weight of the ceramic pigment. For dispersion stability, zirconia balls of 0.3 mm to 1 mm were filled, and the contents were mixed and pulverized at the same time in an ultrasonic oscillator for 12 hours or more. In order to adjust the viscosity and surface tension that determine the ink characteristics, non-particle type yellow color ceramic precursor ink was mixed. Then the ink was coated on glaze ceramics to identify the yellow color expression characteristics.

### [Example 4] Preparing red color ceramic precursor/pigment ink

The red color pigment nano particles prepared and pulverized in [Preparative example 8] were plasticized and then mixed in the non-particle type red color ceramic precursor ink obtained in [Preparative example 4] until the solid matter reached 13 wt%. For effective dispersion of the ceramic pigment, PVP(MW=10,000) and BYK111 were added as dispersants, the amount of the dispersants used being within a range of 1:1 to 1.5 to the weight of the ceramic pigment. In order to enhance the dispersibility, zirconia balls (0.3 mm to 1 mm) were filled, and then the contents were mixed and pulverized at the same time in an ultrasonic oscillator for 12 hours or more. In order to adjust the viscosity and surface tension that affect the ink characteristics, non-particle type red color ceramic precursor ink was mixed. Then the ink was coated on glaze ceramics to identify the red color expression characteristics.

### <Property Measurement Results>

The characteristics of the prepared metal salt carbamate complex, ceramic pigment and the ceramic ink using the same are as follows.

### 1. Pyrolysis Analysis of Co(II)/Al(lII) Mixed Carbamate

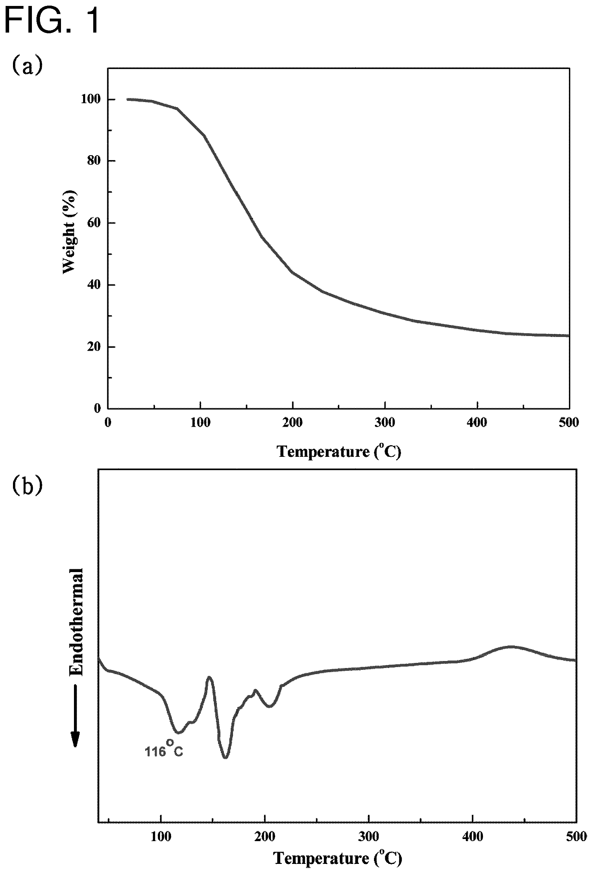

(a) and (b) of FIG. 1 are graphs showing pyrolysis analysis results of Co/AI mixed carbamate using TGA and DSC. In the TGA and DSC analysis, measurements were made with the heating rate being 10°C/minute. Especially, one could see from (a) of FIG. 1, that the metal precursor of cobalt(II) 2-ethylhexylcarbamate was decomposed at 400°C or below, forming CoAl₂O₄ while maintaining a certain weight. The initial weight loss and endothermic peak occurring at 130°C seems to be caused by first the destruction of binding between the 2-ethylhexylcarbamate and metal ions, and the big endothermic peak and weight loss occurring at 187°C thereafter seems to be caused by the decomposition of cobalt and CoO of carbamate, carbon dioxide, and alkylamine. At the same time, since Al has 3 carbamates, the decomposing temperature rises, and the endothermic peak occurring at 300°C or above thereafter seems to be a peak caused by decomposition of the metal and some hydroxide ions. It was identified through the TGA that the total mass loss was 75% at 400°C. CoO and Al₂O₃ seem to be formed as cobalt/aluminum mixed carbamate is decomposed by a simple thermal treatment within a range of 80 to 320°C and generates CoAl₂O₄.

### 2. XRD Pattern Analysis as a function of each temperature when plasticizing CoAl₂O₄.

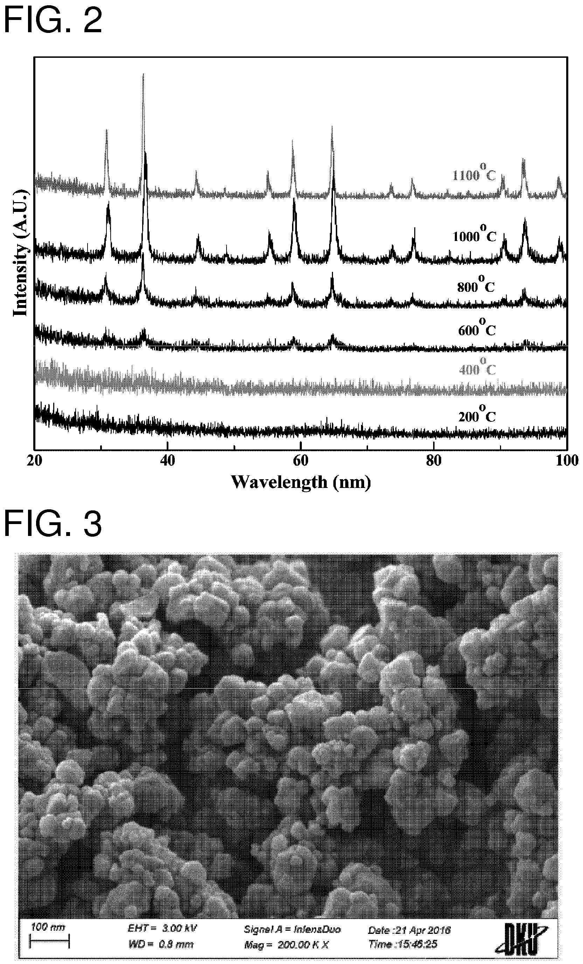

FIG. 2 shows an XRD pattern as a function of each temperature when plasticizing CoAl₂O₄. In the specimen of XRD plasticized from 200°C to 1100°C, a spinel structure does not appear between the initial 200°C-400°C, but the spinel structure started to appear at 600°C. Thereafter, as the temperature rose to 1100°C, it was identified that the spinel structure appeared more sharply.

### 3. SEM Analysis of CoAl₂O₄ Blue Color Ceramic Pigment obtained from Plasticization of Co(II)Al(III) carbamate precursor

FIG. 3 is an SEM photograph of CoAl₂O₄ plasticized at 1100°C. It was observed that the blue color pigment obtained by ball mill pulverizing the zirconia ingredient after being synthesized had particle size of approximately 50 to 150 nm.

### 4. TEM Analysis of CoAl₂O₄ Blue Color Ceramic Pigment obtained from Plasticization of Co(II)/Al(III) carbamate precursor

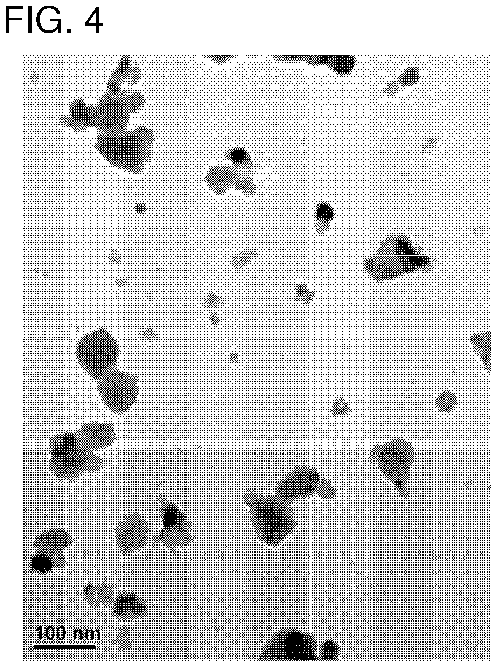

FIG. 4 shows a TEM photograph of the blue color pigment obtained by plasticizing CoAl₂O₄ at 1100°C. The particle size measured after dispersing, in ethanol, the blue color pigment obtained by ball mill pulverizing the zirconia ingredient after being synthesized was 30 to 180 nm.

### 5. Identifying Properties of Non-Particle Ceramic Precursor Ink

### 5.1. Properties of Black Color Non-Particle Ceramic Precursor Ink

In order to prepare a black color ceramic ink using nickel, copper, cobalt, iron and chrome carbamate complex in [Preparative example 1], a doping metal carbamate and host metal carbamate may be mixed in suitable ratios, thereby preparing a ceramic ink expressing black color. The composition that expressed the most stable black color when using these 5 kinds of metal ions was (Co_{0.3}Ni_{0.7}Cu_{0.3})(Cr_{0.5}Fe_{0.5}). Here, when chrome was not existent, in a reaction with glaze, expression of brown color was prominent, and insufficiency of iron caused blue color to be expressed. By dissolving Ni(II), Cu(II), Co(II), Fe(III) and Cr(III) by certain amounts as aforementioned, it was possible to simply and easily prepare carbamate of mixed metals, and since the ionization tendencies were similar to one another under storage conditions, it was possible to obtain the mixed carbamate without any changes caused by oxidization/reduction reaction when mixing the metals. The viscosity of the obtained ink was 12.1 cps, and the surface tension was 31.7 dyne/cm⁻². The Lab values of the (Ni,Co,Cu)(Fe,Cr)₂Ox group non-particle ceramic ink were L*16.63, a*-4.93, and b*12.57, respectively.

### 5.2. Properties of Blue Color Non-Particle Ceramic Precursor Ink

In [Preparative example 2], the cobalt and copper carbamate complex being used as the dopant of blue color pigment could be easily prepared from cobalt chloride and copper chloride hydrate. Various metal ingredients such as alumina, silica, calcium oxide, magnesium oxide and barium oxide may act as the host of the blue color pigment, and since they are the main ingredient of glaze, they were excluded from the blue color ink of the present invention. The viscosity of the ink obtained was 12.9 cps and the surface tension was 31.9 dyne/cm⁻². The Lab values of the (Co,Cu)Ox blue color non-particle type ceramic ink were L*70.35, a*-8.82, and b*19, respectively.

### 5.3. Properties of Yellow Color Non-Particle Ceramic Precursor Ink

In [Preparative example 3], chrome was used as the dopant material of yellow color pigment, and antimon and titanium were used as host materials. Chrome carbamate may be easily prepared from chrome chloride hydrate, but since salt of antimony is dissolved in strong acidity, it cannot be reacted with EHAEHC to prepare a carbamate compound. Therefore, antimonytriacetate that can be dissolved in butylcarbitol used as the solvent of ceramic ink was used. Titanium oxide is also used as the rutile host. Carbamate of titanium is known to have a structural formula of Ti₃(O)(OOCNHR)₇, and since it is unstable, it reacts with moisture the moment it is generated and forms gel. Therefore, triethanolaminetitanium complex that is a stable organic metal compound having good solubility in organic solvents was selected. The viscosity of the ink obtained was 10.4 cps and the surface tension was 35.0 dyne/cm⁻². The Lab values of (Cr,Sb,Ti)Ox yellow color non-particle type ceramic ink were L*78.63, a*3.78, and b*42.69, respectively.

### 5.4. Properties of Red Color Non-Particle Ceramic Precursor Ink

The tin carbamate compound being used as the dopant of the red color ceramic pigment in [Preparative example 4] may be prepared from tin 4chloride hydrate. However, in this case, since 4 carbamates combine with tin by negative ions, the content of tin ions will relatively decrease, and a phenomenon occurs where the viscosity of ink increases significantly when using a certain amount or more ink. Further, 2 tin chloride has very strong reducibility, and thus precipitate may be generated due to oxidation-reduction in the process of mixing with other metal salts, and thus 2 tin chloride could not be used. Therefore, tindioctoate (Sn(Oct)₂) was selected since it has high solubility in organic solvents and has high stability. Calcium is generally used as the host material of red color ceramic pigment, but it was excluded since it contains a large amount of glaze. The viscosity of the ink obtained was 10.8 cps, and the surface tension was 33.4 dyne/cm⁻². The Lab values of the (Cr,Sn)Ox red color non-particle type ceramic ink were L*67.91, a*15.79, and b*-9.39, respectively.

### 6. Identifying Properties of Ceramic Pigment

### 6.1. Properties of Black Color Ceramic Pigment

In order to increase the color expression of black color ceramic ink in [Preparative example 5], black color pigment nano particles to be dispersed in the non-particle type precursor, was prepared. Generally, a ceramic pigment prepared by a solid plasticization method of inorganic metal salts that form ceramic pigment ingredients has large particles and is difficult to be nano-granulated by physical pulverization. Therefore, organic metal compounds forming organic chelate combinations with various forms of metal, are being used. Therefore, in order to prepare a mixed type ceramic ink where nano pigment is dispersed, the solids remaining after removing the solvent from the non-particle type black color ink ingredient of [Preparative example 1], were plasticized. First, the mixed carbamate complex was primarily plasticized at 300 °C to remove the remaining organic matters and then a secondary plasticization was performed for 1-2 hours at 1000°C or 1250°C. All (Ni,Co,Cu)(Fe,Cr)₂O₄ showed spinel structures. There is CoFe₂O₄ having a simple composition that is commonly used as the black color ceramic pigment, but the color of CoFe₂O₄ may be diluted or discolored due to reaction with glaze. That is why the composition including the 5 kinds of elements, was selected.

### 6.2. Properties of Blue Color Ceramic Pigment

In order to increase the color expression in [Preparative example 6], CoAl₂O₄ was used as the blue color pigment to be dispersed in the blue color ceramic ink. Here, cobalt is a traditional blue color dopant, and alumina acts as an effective host. Co₂SiO₄ and olivine, willemite such as (Co,Zn)2SiO₄ and spinel structures of CoAl₂O₄ and (Co,Zn)Al₂O₄ are widely used as blue color pigment. Especially, CoAl₂O₄ is so-called 'cobalt blue', that is most widely used, and in a cubic close-packed arrangement of M'M₂O₄, M'²⁺ ions occupy the tetrahedron position. Meanwhile, M³⁺ ions occupy the octahedron position. The vivid color of CoAl₂O₄ is known to be caused by d-d transition or host-lattice absorption in the crystalline field theory. In order to be suitable as a cyan color, a* value is most optimal around -10 and b* value is most optimal around -30, and thus by adding Zn(II), b* value may be changed at the same time as a* value, thereby exhibiting the cyan color expression effect. In order to prepare a mixed type ceramic ink where nano pigment is dispersed, mixed carbamate complex of cobalt(II)/aluminum(III) 2-ethylhexylcarbamate was plasticized and synthesized.

### 6.3. Properties of Yellow Color Ceramic Pigment

In [Preparative example 7], (Cr,Sb,Ti)Ox was used as the ceramic nano particles to exhibit yellow color, and various raw materials were used. Cr(III) can form a carbamate, and thus the ink was constituted by chrome(III) 2-ethylhexylcarbamate, antimony-diacetate and triethanolaminetitanium complex. Here, the antimony group was selected in consideration of the stability and solubility in organic solvents. Organic-bound precursors of Ti exist in various ways. Alkoxy groups are mainly used, but since they are weak to hydrolysis, triethanolamine complex was used. Generally, ceramic ink is printed on top of a ceramic that has been biscuit fired, and then glaze is applied on an upper layer thereof, or the ceramic ink is printed on top of where the glaze is applied. Then, a plasticizing process is performed. Most of the glazes used in this process consist of various metal oxides such as SiO₂, Al₂O₃, B₂O₃, Na₂O, K₂O, Li₂O, CaO, MgO, ZrO2, ZnO and BaO, and especially, SiO₂ is existent most abundantly. In an ink that uses precursors, such metal oxide precursors that act as hosts may be excluded since they can be replaced by glaze. Si ingredient was excluded for this reason in the case of yellow color ceramic nano particles. The prepared yellow color nano particles had nano sizes of 50 to 150 nm.

### 6.4. Properties of Red Color Ceramic Pigment

In [Preparative example 8], chrome(III) 2-ethylhexylcarbamate complex and tin(II)dioctoate were used as the ceramic pigment for expressing red color. In order to express red color, a chrome dopant is needed, and the smaller the amount of chrome, the lighter the red color. Tin also acts as a dopant, and if tin is excluded, the color moves towards green color. Therefore, calcium and silicon act as hosts, and the change of color by the amount of calcium and silicon is insignificant. Therefore, calcium and silicon were excluded from the red color pigment nano particles of the present invention. That is because, there is always a large amount of calcium and silicon existing in any kind of glaze ingredient. The ratio of metal atoms for the most optimum level of red color expression is Cr_{0.01}Sn_{0.99}Ca₁Si₁, and the red color ceramic pigment nano particles were prepared. The red color pigment obtained by plasticizing at 1200 °C is the color called "burgundy", which is widely used as magenta in ceramic ink. The ingredient of ceramic pigment has Ca(Cr,Sn)SiO₅ as follows, that is known as malayaite phase. For the color expression, the mole ratio of chrome and tin must be Cr₂O₃/SnO₂= 0.03 or below, and the optimum amount in the present invention was 0.01. It appears that in Cr₂O₃ affecting the color expression, chrome(III) and chrome(IV) are mixed, but the Cr(IV) ions employed in malayaite crystals are known to play the major role. The Lab values of Ca(Cr,Sn)SiO₅ group red color were L*32.89, a*22.83, and b*5.93, respectively.

### 7. Identifying Properties of Ceramic Ink

### 7.1. Properties of Black Color Ceramic Ink

In [Example 1], black color precursor nano particles obtained from plasticization of Ni(II)/Cu(II)/Co(II)/Fe(III)/Cr(III) 2-ethylhexylcarbamate of [Preparative example 5] were dispersed in the black color ceramic precursor ink (100 mL) consisting of the mixed carbamate complex of Ni(II)/Cu(II)/Co(II)/Fe(III)/Cr(III) 2-ethylhexylcabamate of [Preparative example 1], thereby preparing the final black color nano particle dispersed type black color ceramic precursor ink. The surface of the particles consisting of 5 kinds of metal oxides generally includes numerous hydroxyl radicals. The hydroxyl radicals combined with the metal as aforementioned show alkalinity, and absorbs acid copolymer additives such as BYK 111, providing stable dispersion characteristics in organic solvents. Further, low molecule PVP is easily dissolved in organic solvents, and the nitrogen and oxygen of pyrrolidone chains have strong interactive force with metal oxides that lack electrons, thereby significantly contributing to dispersion of metal oxide nano particles. It was measured that the viscosity of the ink obtained was 14.3 cps, and the surface tension was 33.6 dyne/cm⁻². The Lab values of (Ni,Co,Cu)(Fe,Cr)₂Ox black color nano particle dispersed type ceramic ink were L*13.28, a*-1.43, and b*2.48.

### 7.2. Properties of Blue Color Ceramic Ink

Co(II)/Al(III) group was selected as the ceramic pigment for expressing blue color in [Example 2]. Such a group has a general formula of AB₂O₄, and in a spinel, A²⁺ ions are in tetrahedron positions and B³⁺ ions are in octahedron positions, and their representative structure is CoAl₂O₄. In the present invention, in order to express blue color that is close to cyan, CoAl₂O₄ directly plasticized at a high temperature was prepared instead of precursor powder. It was identified that after performing a ball mill, the particle size of the obtained blue color pigment was pulverized to nano particles, and with the help of the dispersant, within the blue color non-particle ink, blue color nano particles dispersed type blue color ceramic precursor ink was prepared. The measured viscosity of the obtained ink was 15.6 cps, and the surface tension was 33.4 dyne/cm⁻². The Lab values of the (Co,Cu)Ox blue color nano particle dispersed type ceramic ink were L*8.41, a*40.74, b*-56.54, respectively.

### 7.3. Properties of Yellow Color Ceramic Ink

The pulverized yellow color pigment nano particles in [Example 3] were dispersed in the non-particle type yellow color precursor ink using PVP and BYK111 as dispersants. The measured viscosity of the obtained ink was 10.8 cps, and the surface tension was 35.3 dyne/cm⁻². The Lab values of the (Cr,Sb,Ti)Ox yellow color nano particle dispersed type ceramic ink were L*61.08, a*22.32, and b*-50.31, respectively.

### 7.4. Properties of Red Color Ceramic Ink

It was identified that in the red color pigment obtained by plasticizing red color chrome(III) 2-ethylhexylcarbamate and tin(II) dioctoate in [Preparative example 4], with the help of the dispersant, within the red color non-particle ink, dispersion is easily performed. The measured viscosity of the obtained ink was 13.3 cps, and the surface tension was 35.0 dyne/cm⁻². The Lab values of the Ca(Cr,Sn)Ox red color nano particle dispersed type ceramic ink were L*48.39, a*24.26, and b*-15.11, respectively.

Characteristics such as the ingredients of each ceramic ink prepared in the Examples, preparation conditions, colors and Lab values and the like are as shown in Table 1 below.

**[Table 1]**

| Properties of Ceramic Ink Including Metal Precursors and Pigment at the same time. | | | | | |
|---|---|---|---|---|---|
| Color | | Black color | Blue color | Yellow color | Red color |
| Composition (eq) | | 0.3Co/0.7Ni/0.3 Cu/0.5Cr/0.5Fe | 0.2Co/2Cu | 0.03Cr/0.1 Sb/0.5 Ti | 0.02Cr/0.98Sn |
| Solid content (%) | | 6 | 6 | 7 | 13 |
| Viscosity (cps) | | 14.3 | 15.6 | 10.8 | 13.3 |
| Surface tension (dyne/cm²) | | 33.6 | 33.4 | 35.3 | 35 |
| Color coordinates | L* | 13.28 | 8.41 | 61.08 | 48.39 |
| | a* | -1.43 | 40.74 | 22.32 | 24.26 |
| | b* | 2.48 | -56.54 | 50.31 | -15.11 |
| Average particle size | | 119 nm | 122 nm | 129 nm | 126 nm |

As can be seen from Table 1, all the pigment solid components after the final plasticization of each ceramic ink according to the present invention were 6% or more. This is higher than the solid matter of the ceramic pigment dispersed ink that is currently commercialized (the solid matter of the ceramic pigment dispersed ink that is currently commercialized is generally 5% or below). Therefore, the ceramic ink of the present invention includes sufficient amount of ceramic pigment solid matter, allowing in depth inkjet printing. Meanwhile, since the color coordinate may vary depending on small content difference in dopant metals, the color coordinate may be adjusted according to the mix ratio of raw materials at the time of preparation, and thus the surface tension and viscosity can also be easily adjusted.

The right of the scope of the present invention is not limited to the aforementioned embodiments but may be realized in various types of embodiments within the claims attached hereto.

## Claims

1. A method for preparing ceramic ink, the method comprising:
preparing a metal carbamate solution by dissolving a metal carbamate in a solvent;
preparing a ceramic pigment by plasticizing the metal carbamate; and
mixing the metal carbamate solution, the ceramic pigment and a dispersant.

2. The method of claim 1,
further comprising pulverizing a mixture of the metal carbamate solution, the ceramic pigment and the dispersant.

3. The method of claim 1 or 2,
wherein the metal carbamate is prepared by a method comprising:
preparing a metal precursor solution by dissolving a metal salt or its hydrate in a solvent;
preparing an ammonium carbamate solution by dissolving an ammonium carbamate in a solvent;
preparing the metal carbamate by mixing the obtained metal precursor solution and the obtained ammonium carbamate solution; and
mixing two or more kinds of the prepared metal carbamates.

4. The method of any of the foregoing claims,
wherein the metal carbamate is prepared by a method comprising:
preparing a metal precursor solution by dissolving two or more kinds of metal salts or their hydrates in a solvent;
preparing an ammonium carbamate solution by dissolving an ammonium carbamate in a solvent; and
preparing the metal carbamate by mixing the obtained metal precursor solution and the obtained ammonium carbamate solution.

5. The method of any of the foregoing claims,
wherein the metal carbamate is a composite comprising two or more kinds of metal carbamates.

6. The method of any of the foregoing claims,
wherein the metal carbamate is one or more kinds selected from a group consisting of nickel(II) di(2-ethylhexylcarbamate), manganese(II) di(2-ethylhexylcarbamate), cobalt(II) di(2-ethylhexylcarbamate), iron(III) tri(2-ethylhexylcarbamate), chrome(III) 2-ethylhexylcarbamate, aluminum(III) tri(2-ethylhexylcarbamate), tin(II) di(2-ethylhexylcarbamate) and calcium(II) di(2-ethlyhexylcarbamate).

7. The method of any of the foregoing claims,
wherein the ceramic pigment being mixed is 3 to 10 wt% based on 100wt% of a final ceramic ink.

8. The method of any of the foregoing claims,
wherein the dispersant being mixed is 1 to 1.5 times weight of a weight of the ceramic pigment contained in the ceramic ink.

9. The method of any of the foregoing claims,
wherein the plasticizing of metal carbamate is performed by a primary plasticizing step at 100°C to 300°C, and a secondary plasticizing step at 300°C to 1500°C.

10. The method of claim 3 or claim 4,
wherein the metal salt is one or more kinds selected from a group consisting of copper oxide, copper chloride, copper acetate, copper nitrate, copper sulfate, iron oxide, iron chloride, iron acetate, iron nitrate, iron sulfate, cobalt chloride, cobalt acetate, cobalt nitrate, cobalt sulfate, nickel chloride, nickel acetate, nickel nitrate, nickel sulfate, manganese oxide, manganese chloride, manganese acetate, manganese nitrate, manganese sulfate, aluminum chloride, aluminum acetate, aluminum nitrate, aluminum sulfate, calcium oxide, calcium chloride, calcium acetate, calcium nitrate, calcium sulfate, tin oxide(II), tin chloride(II), tin acetate(II), tin nitrate(II) and tin sulfate(II).

11. The method of any of claims 3, 4, 10,
wherein the ammonium carbamate is one or more kinds selected from a group consisting of ethylammonium ethylcarbamate, isopropylammonium isopropylcarbamate, n-butylammonium n-butylcarbamate, isobutylammonium isobutylcarbamate, tert-butylammonium tert-butylcarbamate, 2-ethylhexylammonium 2-ethylhexylcarbamate, octadecylammonium octadecylcarbamate, 2-methoxyethylammonium 2-methoxyethylcarbamate, 2-cyanoethylammonium, 2-cyanoethylcarbamate, dibutylammonium dibutylcarbamate, dioctadecylammonium dioctadecylcarbamate, methyldecylammonium methyldecylcarbamate, hexamethyleneimineammonium hexamethyleneiminecarbamate, mopolynium mopolylenecarbamate, pyridium ethylhexylcarbamate, triethylenediaminium isopropylcarbamate, benzylammonium benzylcarbamate and triethoxysilylpropylammonium triethoxysilylpropylcarbamate.

12. The method of any of claims 3, 4, 10, 11,
wherein the metal salt(s) or its/their hydrate(s), and the ammonium carbamate are dissolved in a polar solvent or a non-polar solvent.

13. The method of any of claims 3, 4, 10, 11, 12,
further comprising removing the solvent from the mixed solution obtained by mixing the metal precursor solution and the ammonium carbamate solution.

14. A ceramic ink prepared by the method for preparing ceramic ink of any of claims 1-13.

15. The ceramic ink of claim 14,
wherein a particle diameter of the ceramic pigment included in the ceramic ink is 50 to 150 nm.

## Patentansprüche

1. Verfahren zur Herstellung von keramischer Tinte, wobei das Verfahren Folgendes umfasst:
Herstellen einer Metallcarbamatlösung durch Lösen eines Metallcarbamats in einem Lösungsmittel;
Herstellen eines keramischen Pigment durch Weichmachen des Metallcarbamats; und
Mischen der Metallcarbamatlösung, des keramischen Pigments und eines Dispergiermittels.

2. Verfahren nach Anspruch 1,
ferner das Pulverisieren einer Mischung der Metallcarbamatlösung, des keramischen Pigments und des Dispergiermittels umfassend .

3. Verfahren nach Anspruch 1 oder 2,
wobei das Metallcarbamat durch ein Verfahren hergestellt wird umfassend:
Herstellen einer Metallvorläuferlösung durch Lösen eines Metallsalzes oder seines Hydrats in einem Lösungsmittel;
Herstellen einer Ammoniumcarbamatlösung durch Lösen eines Ammoniumcarbamats in einem Lösungsmittel;
Herstellen des Metallcarbamats durch Mischen der erhaltenen Metallvorläuferlösung und der erhaltenen Ammoniumcarbamatlösung; und
Mischen von zwei oder mehr Arten der hergestellten Metallcarbamate.

4. Verfahren nach irgendeinem der vorhergehenden Ansprüche,
wobei das Metallcarbamat durch ein Verfahren hergestellt wird umfassend:
Herstellen einer Metallvorläuferlösung durch Lösen von zwei oder mehr Arten von Metallsalzen oder ihren Hydraten in einem Lösungsmittel;
Herstellen einer Ammoniumcarbamatlösung durch Lösen eines Ammoniumcarbamats in einem Lösungsmittel;
Herstellen des Metallcarbamats durch Mischen der erhaltenen Metallvorläuferlösung und der erhaltenen Ammoniumcarbamatlösung.

5. Verfahren nach irgendeinem der vorhergehenden Ansprüche,
wobei das Metallcarbamat ein Verbundstoff ist, der zwei oder mehr Arten von Metallcarbamaten umfasst.

6. Verfahren nach irgendeinem der vorhergehenden Ansprüche,
wobei das Metallcarbamat eine oder mehrere Arten ist ausgewählt aus einer Gruppe bestehend aus Nickel(II)di(2-ethylhexylcarbamat), Mangan(II)di(2-ethylhexylcarbamat), Kobalt(II)di(2-ethylhexylcarbamat), Eisen(III)tri(2-ethylhexylcarbamat), Chrom(III)2-ethylhexylcarbamat, Aluminium(III)tri(2-ethylhexylcarbamat), Zinn(II)di(2-ethylhexylcarbamat) und Calcium(II)di(2-ethlyhexylcarbamat).

7. Verfahren nach irgendeinem der vorhergehenden Ansprüche,
wobei das keramische Pigment, das gemischt wird, 3 bis 10 Gew.-%, auf 100 Gew.-% der endgültigen keramischen Tinte bezogen, beträgt.

8. Verfahren nach irgendeinem der vorhergehenden Ansprüche,
wobei das Dispergiermittel, das gemischt wird, 1 bis 1,5-mal das Gewicht eines Gewichts des in der keramischen Tinte enthaltenen keramischen Pigments beträgt.

9. Verfahren nach irgendeinem der vorhergehenden Ansprüche,
wobei das Weichmachen des Metallcarbamats durch einen primären Weichmachungsschritt bei 100 °C bis 300 °C und einen sekundären Weichmachungsschritt bei 300 °C bis 1500 °C ausgeführt wird.

10. Verfahren nach Anspruch 3 oder Anspruch 4,
wobei das Metallsalz eine oder mehrere Arten ist ausgewählt aus einer Gruppe bestehend aus Kupferoxid, Kupferchlorid, Kupferacetat, Kupfernitrat, Kupfersulfat, Eisenoxid, Eisenchlorid, Eisenacetat, Eisennitrat, Eisensulfat, Kobaltchlorid, Kobaltacetat, Kobaltnitrat, Kobaltsulfat, Nickelchlorid, Nickelacetat, Nickelnitrat, Nickelsulfat, Manganoxid, Manganchlorid, Manganacetat, Mangannitrat, Mangansulfat, Aluminiumchlorid, Aluminiumacetat, Aluminiumnitrat, Aluminiumsulfat, Calciumoxid, Calciumchlorid, Calciumacetat, Calciumnitrat, Calciumsulfat, Zinnoxid(II), Zinnchlorid(II), Zinnacetat(II), Zinnnitrat(II) und Zinnsulfat(II).

11. Verfahren nach irgendeinem der Ansprüche 3, 4, 10,
wobei das Ammoniumcarbamat eines oder mehrere Arten ist ausgewählt aus einer Gruppe bestehend aus Ethylammoniumethylcarbamat, Isopropylammoniumisopropylcarbamat, n-Butylammonium-n-butylcarbamat, Isobutylammoniumisobutylcarbamat, tert-Butylammonium-tert-butylcarbamat, 2-Ethylhexylammonium-2-ethylhexylcarbamat, Octadecylammoniumoctadecylcarbamat, 2-Methoxyethylammonium-2-methoxyethylcarbamat, 2-Cyanoethylammonium-2-cyanoethylcarbamat, Dibutylammoniumdibutylcarbamat, Dioctadecylammoniumdioctadecylcarbamat, Methyldecylammoniummethyldecylcarbamat, Hexamethyleniminammoniumhexamethylenimincarbamat, Mopolyniummopolylencarbamat, Pyridiumethylhexylcarbamat, Triethylendiaminiumisopropylcarbamat, Benzylammoniumbenzylcarbamat und Triethoxysilylpropylammoniumtriethoxysilylpropylcarbamat.

12. Verfahren nach irgendeinem der Ansprüche 3, 4, 10, 11,
wobei das/die Metallsalz(e) oder sein/ihre Hydrat(e) und das Ammoniumcarbamat in einem polaren Lösungsmittel oder einem nichtpolaren Lösungsmittel gelöst werden.

13. Verfahren nach irgendeinem der Ansprüche 3, 4, 10, 11, 12,
ferner das Entfernen des Lösungsmittels von der gemischten Lösung, die durch Mischen der Metallvorläuferlösung und der Ammoniumcarbamatlösung erhalten worden ist, umfassend.

14. Keramische Tinte, die durch das Verfahren zur Herstellung keramischer Tinte nach irgendeinem der Ansprüche 1-13 hergestellt wird.

15. Keramische Tinte nach Anspruch 14,
wobei ein Teilchendurchmesser des keramischen Pigments, das in der keramischen Tinte enthalten ist, 50 bis 150 nm beträgt.

## Revendications

1. Procédé de préparation d'encre céramique, le procédé comprenant :
la préparation d'une solution de carbamate métallique par dissolution d'un carbamate métallique dans un solvant ;
la préparation d'un pigment céramique par plastification du carbamate métallique ; et
le mélange de la solution de carbamate métallique, du pigment céramique et d'un dispersant.

2. Procédé de la revendication 1,
comprenant en outre la pulvérisation d'un mélange de la solution de carbamate métallique, du pigment céramique et du dispersant.

3. Procédé de la revendication 1 ou 2,
dans lequel le carbamate métallique est préparé par un procédé comprenant :
la préparation d'une solution de précurseur métallique par dissolution d'un sel métallique ou de son hydrate dans un solvant ;
la préparation d'une solution de carbamate d'ammonium par dissolution d'un carbamate d'ammonium dans un solvant ;
la préparation du carbamate métallique par mélange de la solution de précurseur métallique obtenue et de la solution de carbamate d'ammonium obtenue ; et
le mélange d'au moins deux types des carbamates métalliques préparés.

4. Procédé de l'une quelconque des revendications précédentes,
dans lequel le carbamate métallique est préparé par un procédé comprenant :
la préparation d'une solution de précurseur métallique par dissolution d'au moins deux types de sels métalliques ou de leurs hydrates dans un solvant ;
la préparation d'une solution de carbamate d'ammonium par dissolution d'un carbamate d'ammonium dans un solvant ; et
la préparation du carbamate métallique par mélange de la solution de précurseur métallique obtenue et de la solution de carbamate d'ammonium obtenue.

5. Procédé de l'une quelconque des revendications précédentes,
dans lequel le carbamate métallique est un composite comprenant au moins deux types de carbamates métalliques.

6. Procédé de l'une quelconque des revendications précédentes,
dans lequel le carbamate métallique est un ou plusieurs types choisis dans un groupe constitué par le di(2-éthylhexylcarbamate) de nickel(II), le di(2-éthyl¬hexylcarbamate) de manganèse(II), le di(2-éthylhexyl¬carbamate) de cobalt(II), le tri(2-éthylhexylcarbamate) de fer(III), le 2-éthylhexylcarbamate de chrome(III), le tri(2-éthylhexylcarbamate) d'aluminium(III), le di(2-éthylhexylcarbamate) d'étain(II) et le di(2-éthyl-hexylcarbamate) de calcium(II).

7. Procédé de l'une quelconque des revendications précédentes,
dans lequel le pigment céramique mélangé représente 3 à 10 % en poids, rapporté à 100 % en poids d'une encre céramique finale.

8. Procédé de l'une quelconque des revendications précédentes,
dans lequel le dispersant mélangé pèse 1 à 1,5 fois le poids du pigment céramique contenu dans l'encre céramique.

9. Procédé de l'une quelconque des revendications précédentes,
dans lequel la plastification du carbamate métallique est effectuée par une étape de plastification primaire à 100 °C à 300 °C, et une étape de plastification secondaire à 300 °C à 1500 °C.

10. Procédé de la revendication 3 ou la revendication 4,
dans lequel le sel métallique est un ou plusieurs types choisis dans un groupe constitué par l'oxyde de cuivre, le chlorure de cuivre, l'acétate de cuivre, le nitrate de cuivre, le sulfate de cuivre, l'oxyde de fer, le chlorure de fer, l'acétate de fer, le nitrate de fer, le sulfate de fer, le chlorure de cobalt, l'acétate de cobalt, le nitrate de cobalt, le sulfate de cobalt, le chlorure de nickel, l'acétate de nickel, le nitrate de nickel, le sulfate de nickel, l'oxyde de manganèse, le chlorure de manganèse, l'acétate de manganèse, le nitrate de manganèse, le sulfate de manganèse, le chlorure d'aluminium, l'acétate d'aluminium, le nitrate d'aluminium, le sulfate d'aluminium, l'oxyde de calcium, le chlorure de calcium, l'acétate de calcium, le nitrate de calcium, le sulfate de calcium, l'oxyde d'étain(II), le chlorure d'étain(II), l'acétate d'étain(II), le nitrate d'étain(II) et le sulfate d'étain(II).

11. Procédé de l'une quelconque des revendications 3, 4, 10,
dans lequel le carbamate d'ammonium est un ou plusieurs types choisis dans un groupe constitué par l'éthylcarbamate d'éthylammonium, l'isopropylcarbamate d'isopropylammonium, le n-butylcarbamate de n-butyl¬ammonium, l'isobutylcarbamate d'isobutylammonium, le tert-butylcarbamate de tert-butylammonium, le 2-éthyl-hexylcarbamate de 2-éthylhexylammonium, l'octadédyl-carbamate d'octadédylammonium, le 2-méthoxyéthylcarbamate de 2-méthoxyéthylammonium, le 2-cyanoéthylcarbamate de 2-cyanoéthylammonium, le dibutylcarbamate de dibutyl¬ammonium, le dioctadécylcarbamate de dioctadécylammonium, le méthyldécylcarbamate de méthyldécylammonium, l'hexaméthylèneiminecarbamate d'hexaméthylèneimine-ammonium, le mopolylènecarbamate de mopolynium, l'éthylhexylcarbamate de pyridium, l'isopropylcarbamate de triéthylènediaminium, le benzylcarbamate de benzylammonium et le triéthoxysilylpropylcarbamate de triéthoxysilylpropylammonium.

12. Procédé de l'une quelconque des revendications 3, 4, 10, 11,
dans lequel le(s) sel(s) métallique(s) ou son/leurs hydrate(s), et le carbamate d'ammonium sont dissous dans un solvant polaire ou un solvant apolaire.

13. Procédé de l'une quelconque des revendications 3, 4, 10, 11, 12,
comprenant en outre le retrait du solvant de la solution mélangée obtenue par mélange de la solution de précurseur métallique et de la solution de carbamate d'ammonium.

14. Encre céramique préparée par le procédé de préparation d'encre céramique de l'une quelconque des revendications 1 à 13.

15. Encre céramique de la revendication 14,
un diamètre de particules du pigment céramique contenu dans l'encre céramique étant de 50 à 150 nm.
